Europäisches Patentamt

European Patent Office

Office européen des brevets

(19)

(11) Veröffentlichungsnummer: **0 063 772**
A1

(12) **EUROPÄISCHE PATENTANMELDUNG**

(21) Anmeldenummer: 82103275.2

(22) Anmeldetag: **19.04.82**

(51) Int. Cl.³: **F 16 K 1/34**, F 16 K 51/00

(30) Priorität: 24.04.81 DE 3116401

(43) Veröffentlichungstag der Anmeldung: **03.11.82**
**Patentblatt 82/44**

(84) Benannte Vertragsstaaten: **CH DE GB LI NL**

(71) Anmelder: **INTERATOM Internationale Atomreaktorbau GmbH, Friedrich-Ebert-Strasse, D-5060 Bergisch Gladbach 1 (DE)**

(72) Erfinder: **Höhn, Norbert, Druckterather Strasse 29, D-5000 Köln 80 (DE)**
Erfinder: **Frasen, Harald, Schlehenweg 6, D-5063 Overath (DE)**

(74) Vertreter: **Mehl, Ernst, Dipl.-Ing. et al, Postfach 22 01 76, D-8000 München 22 (DE)**

(54) **Selbstreinigendes Hubventil.**

(57) Ein Ganzmetallventil, das auch bei erhöhten Temperaturen einsetzbar ist und durch die Schließbewegung selbst von möglichen Ablagerungen am Ventilsitz (2) gereinigt wird. Der Ventilteller (1) ist dazu an seinem unteren Ende kegelförmig ausgebildet mit einem Außendurchmesser, der geringer als der Innendurchmesser des Ventilsitzes ist und so elastisch, daß er durch die Anpreßkräfte in nennenswertem Maße elastisch verformt, d. h. in seinem Durchmesser aufgeweitet werden kann. Dabei schiebt der scharfkantig ausgebildete Ventilteller am Boden des hohlzylindrisch ausgebildeten Ventilsitzes haftende Verunreinigungen weg und kommt schließlich an dessen Seitenwand zum Anliegen, wodurch eine zweite Dichtlinie gebildet wird.

EP 0 063 772 A1

INTERATOM                          24.559.7

Internationale Atomreaktorbau GmbH

D-5060 Bergisch Gladbach 1


Selbstreinigendes Hubventil


Die vorliegende Erfindung betrifft ein Hubventil nach dem
Oberbegriff des ersten Anspruchs. Ventile, in denen die
Dichtwirkung durch Anpassung eines elastischen Stoffes
(z.B. Gummi) gegen einen metallischen Ventilsitz erzielt
wird, sind allgemein bekannter Stand der Technik. Für
Ventile, die in Bereichen mit höherer Temperatur eingesetzt werden sollen, für die diese weich-elastischen
Stoffe nicht geeignet sind, sind Lösungen ebenfalls
bekannt. Dabei werden dünne, federnde Dichtlippen aus
Metall unter Verformung im elastischen Bereich gegen
einen konischen Dichtsitz gepreßt, bis die gewünschte
Dichtigkeit erreicht ist. Geringe Toleranzen in der
Rundheit oder im Durchmesser des Ventiltellers können
so bis zu einem gewissen Grade ausgeglichen werden.

Aufgabe der vorliegenden Erfindung ist ein Ventil dieser
Art, das bei verbesserter Dichtwirkung auch zum Einsatz
in Anlagen geeignet ist, in denen Ablagerungen der
Betriebsstoffe unter anderem auch in den Ventilen
stattfinden können. Als Beispiel seien hier Anlagen
genannt, die mit Uranhexafluorid betrieben werden;
infolge unvermeidlicher, geringer Verunreinigungen
des Prozeßgases mit Wasser, bilden sich Ablagerungen
aus Uranylfluorid die sehr fest haften und geeignet
sind, die Erfüllung der in solchen Anlagen zu stellenden
außerordentlich hohen Anforderungen an die Dichtigkeit
der Ventile unmöglich zu machen. Die Beeinträchtigung
der Ventilfunktion durch Ablagerungen ist naturgemäß
umso größer, je seltener das Ventil betätigt wird.


10.04.81 We/Pa

Die Lösung der Aufgabe erfolgt durch die im kennzeichnenden Teil des Anspruchs 1 angegebenen Mittel. Durch ein
Weiterwirken der axialen Schließbewegung nach Erreichen
des Bodens des Ventilsitzes wird der dünne, elastische
Ventilteller so weit aufgeweitet, bis die Bewegung durch
das Erreichen der Seitenwand des Ventiltellers zum Stillstand gebracht wird. Dabei wird eine zweite linienförmige
Dichtung geschaffen, die für sich schon eine erhöhte
Dichtigkeit des Ventils gewährleistet. Durch ein weiteres
"Durchdrücken" des Ventiltellers wird durch Hebelwirkung
eine erhöhte Anpreßkraft erzielt. Die Forderung nach einer
scharfkantigen Ausbildung des Ventiltellers an der Stelle,
wo er mit dem Boden des Ventilsitzes in Berührung kommt
widerspricht zunächst der im Maschinenbau sonst üblichen
leichten Abrundung solcher Kanten und dient dazu, einen
etwa auf dem Ventilsitz gebildeten Belag radial nach
außen wegzuschieben und dabei auch so zu verdichten,
daß er die Dichtwirkung des Ventils nicht nur nicht mehr
behindert, sondern auch in gewissem Maße dazu beiträgt.

Die im zweiten Anspruch vorgeschlagene Ausgestaltung der
Erfindung dient dazu, das Abrollen des Randes des Ventiltellers an der Seitenwand des Dichtsitzes zu erleichtern
und dabei stets gleichmäßige Anpreßkräfte zu gewährleisten.

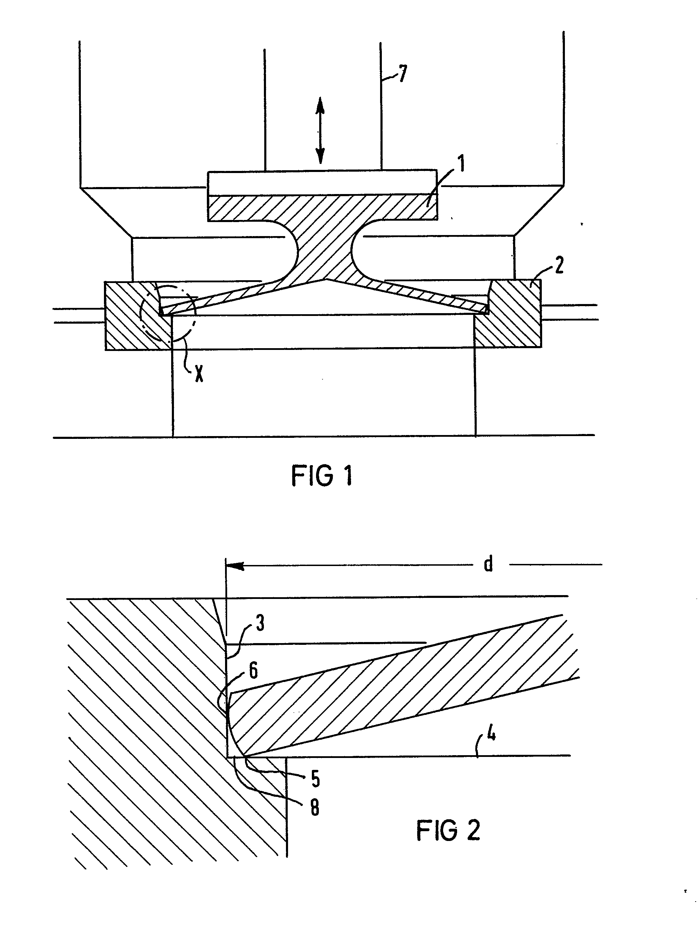

Ein Ausführungsbeispiel der Erfindung ist in der Zeichnung dargestellt, und zwar zeigt
Fig. 1 einen Längsaxialschnitt durch das Ventil und
Fig. 2 in vergrößertem Maßstab die Einzelheit X der
     Figur 1.

Das Ventil besteht aus einem metallischen Ventilteller 1,
der in seinem unteren Teil kegelförmig ausgebildet ist
in einer Stärke, die eine meßbare elastische Verformung
ermöglicht, sobald der Ventilteller 1 auf einem ebenfalls metallischen Sitz 2 zur Anlage gekommen ist und der
Ventilteller 1 mittels eines Betätigungselementes 7
(z.B. Spindel) weiter in Schließrichtung bewegt wird.
(in der Zeichnung von oben nach unten). Der Ventilteller 1,
der im entlasteten Zustand einen Durchmesser aufweist,
der geringer als der Durchmesser d des Ventilsitzes 2
ist, vergrößert seinen Durchmesser bis auf diesen
letzteren, so daß er schließlich an der Seitenwand 6 des
Ventilsitzes 2 zum Anliegen kommt. Die dabei radial nach
außen gerichtete Bewegung der unteren, scharf ausgeführten
Kante 5 bewirkt dabei, daß etwa am Boden 4 des Ventilsitzes anhaftende Beläge 8 abgekratzt bzw. verdichtet
werden. Der ballig ausgeführte Rand 6 des Ventiltellers
1 rollt dabei an der Seitenwand 3 ab und bildet eine
zweite Dichtstelle neben derjenigen, die zwischen der
Kante 5 und dem Boden 4 hergestellt wird. Bei Durchbiegen des Ventiltellers 1 in seiner Mitte wird dieser
im Sitz festgeklemmt und durch die Hebelwirkung die
Anpreßkraft bis zum erforderlichen Maß erhöht, entsprechend dem Verhältnis zwischen dem Radius des Ventiltellers 1 und dem Abstand zwischen der Auflagekante 5
und der Seitenwand 3.

:81 P 0063772 E

INTERATOM                    4                    24.559.7

Internationale Atomreaktorbau GmbH

D-5060 Bergisch Gladbach 1

### Selbstreinigendes Hubventil

### Patentansprüche

1. Hubventil mit metallischem, durch axiales Anpressen elastisch verformbarem, kegeligem Ventilteller (1), g e k e n n z e i c h n e t   d u r c h   folgende Merkmale:

a) Der Ventilsitz (2) ist hohlzylindrisch ausgebildet.

b) Der Innendurchmesser (d) des Ventilsitzes (2) ist größer als der Außendurchmesser des Ventiltellers (1) in entlastetem Zustand.

c) Der Innendurchmesser (d) des Ventilsitzes (2) ist kleiner als der durch Belastung des Ventiltellers (1) im elastischen Bereich maximal erreichbare Außendurchmesser desselben.

d) Die am Boden (4) des Ventilsitzes (2) anliegende Kante (5) des Ventiltellers (1) ist scharf ausgebildet.

2. Ventil nach Anspruch 1, g e k e n n z e i c h n e t   d u r c h   folgendes Merkmal:

a) Der Rand (6) des Ventiltellers (1) ist mit einem Radius abgerundet, der kleiner als der Radius des Ventiltellers ist.

10.04.81 We/Pa

FIG 1

FIG 2

## EUROPÄISCHER RECHERCHENBERICHT

Europäisches
Patentamt

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - A1 - 2 840 618 (LEYBOLD-HERAEUS) <br> * Seite 10, Zeilen 21 bis 27; Fig. 2 * <br> & US - A1 - 4 244 557 <br> --- | 1 | F 16 K 1/34 <br> F 16 K 51/00 |
| A | US - A - 2 196 798 (HORSTMANN) <br> * Seite 1, Spalte 2, Zeilen 20 bis 28; Fig. 2 * <br> --- | 1 | |
| A | US - A - 1 847 385 (DENGLER) <br> * Seite 2, Zeilen 81 bis 111; Fig. 1, 2 * <br> --- | 1 | RECHERCHIERTE SACHGEBIETE (Int. Cl.³) |
| A | US - A - 1 671 139 (WILSON) <br> * Seite 4, Zeilen 4 bis 28; Fig. 1 bis 3 * <br> --- | 1 | F 16 K 1/00 <br> F 16 K 25/00 <br> F 16 K 51/00 |
| A | US - A - 1 654 516 (WILSON) <br> * Seite 3, Zeilen 50 bis 65; Zeilen 106 bis 108; Fig. 1, 2 * <br> --- | 1 | |
| A | DE - A1 - 2 623 906 (VAT) <br> * Seite 9, Zeilen 4 bis 13; Fig. 1 * <br> --- | 2 | |
| A | US - A - 3 108 780 (WISHART) <br> --- | | KATEGORIE DER GENANNTEN DOKUMENTE |
| A | AT - B - 120 618 (KALUZA) <br> --- | | X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument |
| A | US - A - 1 699 217 (WILSON) <br> ---- | | |
| | | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Berlin | 23-06-1982 | SCHLABBACH |

EPA form 1503.1  06.78